# EUROPEAN PATENT SPECIFICATION

(11) **EP 1 745 237 B1**
(45) Date of publication and mention of the grant of the patent: **05.09.2007**
(21) Application number: 05700579.5
(22) Date of filing: 19.01.2005
(51) Int. Cl.: F16L 37/23

(54) **A COUPLING FOR THE TRANSFER OF FLUIDS UNDER PRESSURE**
KUPPLUNG FÜR DEN TRANSFER VON UNTER DRUCK STEHENDEN FLUIDEN
COUPLAGE DESTINE AU TRANSFERT DE FLUIDES SOUS PRESSION

(30) Priority: 14.05.2004 DK 200400771
(43) Date of publication of application: 24.01.2007
(73) Proprietor: Talkob APS, 3520 Farum (DK)
(72) Inventor: HANSEN, Stefan, DK-3520 Farum (DK)
(74) Representative: Gerbaulet, Hannes
(86) International application number: PCT/DK2005/000029
(87) International publication number: WO 2005/111491

(56) References cited:
- EP-A- 0 278 420
- DE-B- 1 260 245
- FR-A- 2 501 824

## Description

The invention relates to a coupling for the transfer of fluids under pressure such as disclosed in DE 1 260 245 B, said coupling being formed by a connecting stub and a locking jacket displaceable relative to the connecting stub and adapted to lock or release a nipple in the coupling during displacement, the connecting stub being provided with at least one part therein which is moveable transversely to the connecting stub, such that the displacement of the locking jacket is prevented.

Such couplings are used for many purposes, e.g. for connecting a water hose with a water tap.

Another application may be the use of a coupling in connection with the cooling of plastics moulds, where fluids are conveyed through the coupling, which causes the temperature of the plastics moulds to be reduced e.g. from 500° to 200°.

A third application may be couplings for use in the supply of aggressive, chemical liquids or gases.

In the two last-mentioned cases, it is desirable, of course, that coupling parts cannot be separated from each other during the supply of fluids.

A coupling with a safety device which relies on the fluid fed through the coupling to affect the safety device such that the coupling parts cannot be separated from each other when the fluid under pressure is present, is known e.g. from the published US Patent Application No. 2003/01512253.

According to this publication, the coupling parts are locked to each other in that two longitudinal tongues, which are offset 180° relative to each other, are pressed into some recesses. These tongues are arranged in a first coupling part, which is pressed by the action of pressure from the fed fluid into a second coupling part by the action of an axial movement of a locking part.

This known coupling cannot be used for a coupling which is intended to lock and release a nipple in the coupling, such that the release of the nipple can take place only when the pressure from the fluid fed through the coupling is reduced to approximately the ambient pressure.

Accordingly, an object of the invention is to provide a coupling with a safety function which may be used in connection with couplings where a nipple may be locked and be released from the coupling.

The object of the invention is achieved by a coupling of the type stated in the introductory portion of claim 1, which is characterized in that the movable part is pressed partly out of the connecting stub by the action of the pressure from the fluid which is fed in use.

It is ensured in this manner that the locking jacket cannot be displaced from the connecting stub when fluid under pressure is present in the coupling.

When, as stated in claim 2, the movable part is formed by an O-ring or a four-edged ring or the like which is arranged in a perforated recess in the connecting stub, a production-wise advantageous safety function is provided, where only a few working operations are to be initiated to realize the safety function.

For particularly demanding uses where maximum certainty against unintentional separation of the coupling parts is desired, it is advantageous if, as stated in claim 3, the connecting stub is provided therein with a second movable part which is disposed concentrically with the first movable part, and, as stated in claim 4, that the second movable part is formed by a split locking ring.

For use where the coupling is to be employed in connection with particularly corrosive liquids, it is expedient if, as stated in claim 5, the movable part is formed by a bushing with a movable piston, which piston is pressed out of the bushing by the action of the pressure from the fluid which is fed, such that the locking jacket cannot be moved.

When, as stated in claim 6, the bushing is secured in a transverse hole in the connecting stub, it is easy to incorporate the bushing, not only in new couplings, but also in already existing couplings where a safety function is desired.

When, as stated in claim 7, the piston is biased by a spring, it is advantageously ensured that as soon the pressure through the coupling is removed, the piston will automatically release its locking effect toward the locking jacket.

For use in the repair or replacement of the bushing and the piston, it is an advantage if, as stated in claim 8, the bushing has outer threads adapted to cooperate with inner threads provided in the transverse hole, as this makes the bushing easy to replace.

Further, the bushing will be relatively easy to dimension for various uses. The force of the spring, e.g., may be dimensioned for the desired pressure conditions merely by inserting a new spring.

If, as stated in claim 9, at the end facing away from the bushing, the piston is terminated by a circular disc which has the same diameter as the transverse hole, and, as stated in claim 10, the circular disc is formed with an annular groove to receive a sealing ring, it is ensured that the fluid fed does not contact the spring. It is moreover ensured that additional seals in connection with the safety device are unnecessary.

The invention will now be explained more fully with reference to the drawing, in which
- fig. 1: shows the coupling before a nipple is locked in it,
- fig. 2: shows the coupling of fig. 1 with the nipple locked in it, but without inner pressure in the coupling,
- fig. 3: shows the coupling of fig. 2 after it has been subjected to inner pressure,
- fig. 4: shows the coupling in an alternative embodiment before a nipple is locked in it,
- fig. 5: shows the coupling of fig. 4 with the nipple locked in it, but without inner pressure in the coupling, while
- fig. 6: shows the coupling of fig. 5 after it has been subjected to pressure.

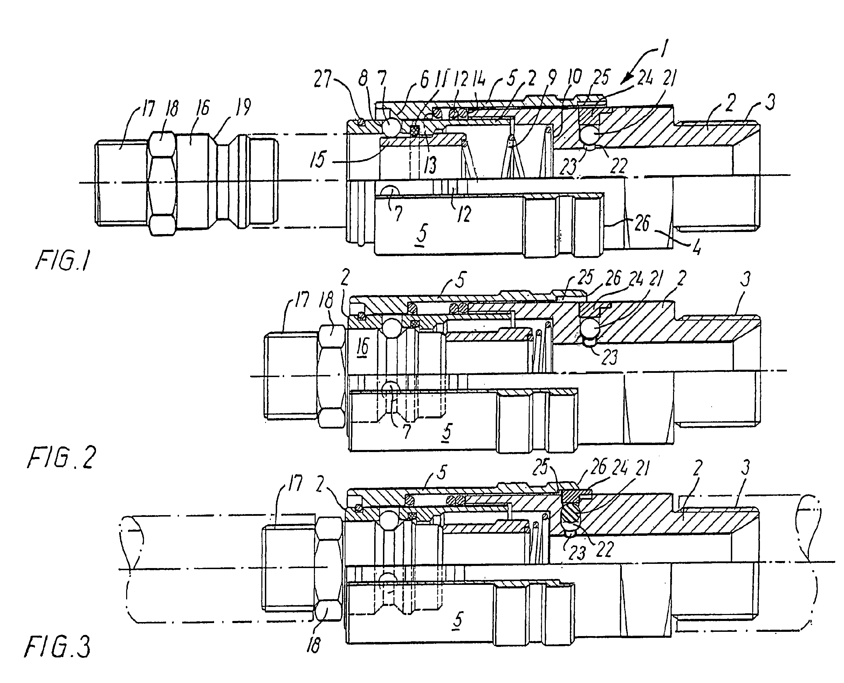

In fig. 1, the numeral 1 designates a coupling which has a connecting stub 2 with outer threads 3 and an integrated nut 4. The threads 3 are intended to be connected with a pressure-supplying assembly (not shown), as is known.

The numeral 5 designates a movable locking jacket which has a locking part in the form of a projection 6.

The numeral 7 designates a ball bearing which is arranged in a groove 8 in the connecting stub 2.

A spring 9 engages an engagement face 10 of the connecting stub with its one end, while its other end engages the end of a small movable pipe 15 provided on part of its surface with a sealing ring in the form of an O-ring 11, which, however, may be replaced by a four-edged ring or the like.

The numeral 27 designates a locking ring which is positioned at the end of the connecting stub which is opposite the threads 3.

Also shown is a larger spring 12 whose one end engages an engagement face 13 on the locking jacket 5, while its other end engages an engagement face 14 on the connecting stub 2.

The numeral 16 designates a nipple which has threads 17 at its one end for use when screwing the nipple by means of an integrated nut 18 into a pressure-supplying assembly (not shown) of a known type. The nipple has a recess 19 which is intended to receive the ball bearing 7.

The mode of operation of the coupling will now be explained more fully:

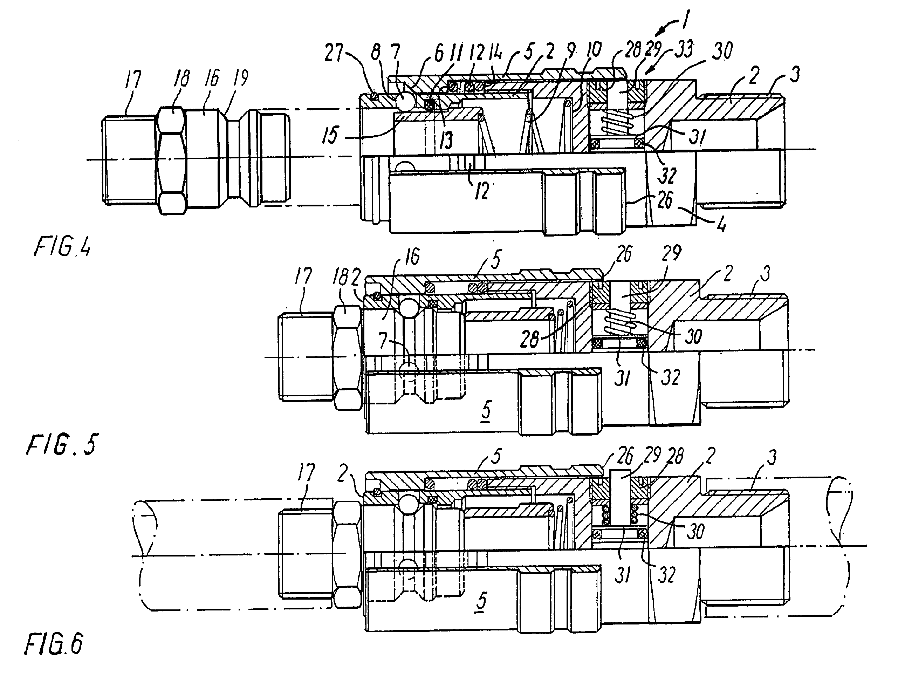

In fig. 1 and fig. 4, the nipple 16 has not yet been inserted into the coupling 1. The locking jacket 5 is kept fixed by the large spring 12, by the ball bearing 7 and the outer surface of the small pipe 15, which prevents the locking jacket 5 from sliding past the ball bearing 7.

When the nipple 16 is now moved inwards toward the small movable pipe 15, the pipe will be moved to the right against the spring force from the spring 9, following which the balls of the ball bearing 7 will slide on the surface of the free end of the nipple and finally be mounted in the recess 19 of the nipple, as will be seen in figures 2 and 5.

Since the balls in the ball bearing 7 have been pressed down into the recess 19, the locking jacket will be pressed toward the locking ring 27 by means of the spring force from the large spring 12.

The coupling is then ready to transfer a fluid under pressure, which may be a liquid or a gaseous medium which is fed through the pressure hoses shown in dot-and-dash line in fig. 3 and fig. 6 to the nipple 16 and the connecting stub 2.

It will be explained below how the coupling is prevented from being separated when pressure is applied to the coupling.

Figs. 1 - 3 show an arrangement with an O-ring 21 arranged in a recess 22 which is configured with a suitable number of cut-outs or holes 23 in its bottom, such that parts of the O-ring are in contact with the fluid which is to be fed through the coupling.

A split locking ring 24 is arranged concentrically with the O-ring. This locking ring may be moved out of the recess 22 by the action of forces from the O-ring. As will additionally be seen in figs. 1 - 3, the locking jacket is formed with an engagement face 25 in the are at the recess 22.

This arrangement operates in the following manner:

When the pressure has been established, the following events will happen:

The O-ring, being subjected to pressure through the recesses 22, will press against the split locking ring, so that the engagement face 25 of the locking jacket 5 will hit the split locking ring if it is attempted to move the locking jacket to the right.

Only when the pressure has been removed from the coupling and the split locking ring 24 and the O-ring have been returned into the recess 22, can the locking jacket be moved to the right.

It should moreover be noted that the split locking ring may be omitted in some uses. In such a case, the O-ring, if it is dimensioned correctly, will operate as a lock to lock the displaceable locking jacket.

Figs. 4 - 6 show another arrangement of a locking part 33 in the form of a bushing 28 with threads for threaded connection with threads on the connecting stub 2. The locking part 33 is formed with a small piston 29 which is movable relative to the bushing 28, and which is terminated by a disc-shaped part 31 at its end facing away from the bushing 28, said disc-shaped part having an outer recess to receive a sealing ring in the form of an O-ring 32.

It should also be noted that the O-ring may be replaced by a four-edged ring or the like.

As will be explained below, this piston is intended to prevent the movement of the locking jacket 5, since an engagement face 26 on the locking jacket 5 will hit the piston 29 when pressure exists in the coupling.

It will now be explained how the arrangement in figs. 4 - 6 operates:

The piston 29, cf. fig. 6, will be pressed forwards in the bushing 28 when pressure is applied to the coupling, which means that the nipple cannot be separated from the coupling as the engagement face 26 of the locking jacket cannot be moved to the right in the figure.

As soon as the pressure is removed from the coupling, the spring force from the spring 30 will cause the piston to be returned to the position shown in fig. 5, following which the nipple may be released from the coupling in that the locking jacket is moved to the right in the figure, which causes the balls in the ball bearing to be released from the recess 19 on the nipple 16, following which the nipple may be disengaged, while the locking jacket is locked in the position shown in fig. 4 with its end against the locking ring 27.

## Claims

1. A coupling (1) for the transfer of fluids under pressure, said coupling being formed by a connecting stub (2) and a locking jacket (5) displaceable relative to the connecting stub and adapted to lock or release a nipple (16) in the coupling during displacement, the connecting stub being provided with at least one part (21, 29) therein which is movable transversely to the connecting stub, such that the displacement of the locking jacket (5) is prevented, **characterized in that** the movable part is pressed partly out of the connecting stub (21) by the action of the pressure from the fluid which is fed in use.

2. A coupling according to claim 1, **characterized in that** the movable part is formed by an O-ring (21) or a four-edged ring or the like which is arranged in a perforated recess (22) in the connecting stub (2).

3. A coupling according to claims 1 - 2, **characterized in that** the connecting stub (2) is provided with a second movable part (24) therein which is disposed concentrically with the first movable part.

4. A coupling according to claim 3, **characterized in that** the second movable part is formed by a split locking ring (24).

5. A coupling according to claim 1, **characterized in that** the movable part is formed by a bushing (28) with a movable piston (29), which piston (29) is pressed out of the bushing (28) by the action of the pressure from the fluid which is fed, such that the locking jacket cannot be moved.

6. A coupling according to claim 5, **characterized in that** the bushing (28) is secured in a transverse hole in the connecting stub.

7. A coupling according to claims 5-6, **characterized in that** the piston (29) is biased by a spring (30).

8. A coupling according to claim 6, **characterized in that** the bushing (28) has outer threads adapted to cooperate with inner threads provided in the transverse hole.

9. A coupling according to claims 6-8, **characterized in that**, at the end facing away from the bushing (28), the piston (29) is terminated by a circular disc (32) which has the same diameter as the transverse hole.

10. A coupling according to claim 9, **characterized in that** the circular disc is formed with an annular recess to receive a sealing ring (32).

## Patentansprüche

1. Kupplung (1) für die Weiterleitung von Fluida unter Druck, wobei die Kupplung durch einen verbindenden Stumpf (2) und ein verriegelndes Mantelstück (5) ausgebildet ist, welches relativ zum verbindenden Stumpf versetzbar ist und ausgelegt ist, um einen Nippel (16) in der Kupplung während des Versetzens zu verriegeln oder freizugeben, wobei der verbindende Stumpf mit wenigstens einem Teil (21, 29) darin ausgestattet ist, welcher quer zum verbindenden Stumpf bewegbar ist, so dass das Versetzen des verriegelnden Mantelstücks (5) verhindert wird,
**dadurch gekennzeichnet, dass** der bewegliche Teil teilweise aus dem verbindenden Stumpf (21) durch die Wirkung des Drucks vom Fluid, welches im Einsatz zugeführt wird, gedrückt wird.

2. Kupplung nach Anspruch 1, **dadurch gekennzeichnet, dass** der bewegliche Teil aus einem O-Ring (21) oder einem vierkantigen Ring oder Ähnliches ausgebildet ist, welcher in einer durchlöcherten Nut (22) im verbindenden Stumpf (2) angeordnet ist.

3. Kupplung nach Ansprüche 1-2, **dadurch gekennzeichnet, dass** der verbindende Stumpf (2) mit einem zweiten beweglichen Teil (24) darin bereit gestellt ist, welcher konzentrisch zum ersten beweglichen Teil angeordnet ist.

4. Kupplung nach Anspruch 3, **dadurch gekennzeichnet, dass** der zweite bewegliche Teil durch einen verriegelnden Spaltring (24) ausgebildet ist.

5. Kupplung nach Anspruch 1, **dadurch gekennzeichnet, dass** der bewegliche Teil durch eine Laufbuchse (28) mit einem beweglichen Kolben (29) ausgebildet ist, wobei der Kolben (29) aus der Laufbuchse (28) durch die Wirkung des Fluids, welches zugeführt wird, gedrückt wird, so dass das verriegelnde Mantelstück nicht bewegt werden kann.

6. Kupplung nach Anspruch 5, **dadurch gekennzeichnet, dass** die Laufbuchse (28) in einem Querloch im verbindenden Stumpf befestigt ist.

7. Kupplung nach Ansprüche 5-6, **dadurch gekennzeichnet, dass** der Kolben (29) durch eine Feder (30) vorgespannt ist.

8. Kupplung nach Anspruch 6, **dadurch gekennzeichnet, dass** die Laufbuchse (28) ein Außengewinde aufweist, welches ausgelegt ist, um mit einem Innengewinde zusammen zu arbeiten, welches im Querloch vorgesehen ist.

9. Kupplung nach Ansprüche 6-8, **dadurch gekennzeichnet, dass** an dem Ende, welches weg von der Laufbuchse (28) gewandt ist, der Kolben (29) durch eine kreisrunde Scheibe (32) abgeschlossen ist, die den gleichen Durchmesser wie das Querloch aufweist.

10. Kupplung nach Anspruch 9, **dadurch gekennzeichnet, dass** die kreisrunde Scheibe mit einer ringförmigen Nut ausgebildet ist, um einen Dichtungsring (32) aufzunehmen.

## Revendications

1. Couplage (1) destiné au transfert de fluides sous pression, ledit couplage étant formé par un formé par un tronçon de connexion (2) et une chemise de verrouillage (5) pouvant être déplacée par rapport au tronçon de connexion et conçue pour verrouiller ou libérer un raccord fileté (16) dans le couplage au cours du déplacement, le tronçon de connexion étant muni d'au moins une partie (21, 29) à l'intérieur de celui-ci qui est mobile de manière transversale par rapport au tronçon de connexion, de sorte que le déplacement de la chemise de verrouillage (5) est empêché, **caractérisé en ce que** la partie mobile est comprimée partiellement hors du tronçon de connexion (21) sous l'action de la pression du fluide qui est introduit pendant l'utilisation.

2. Couplage selon la revendication 1, **caractérisé en ce que** la partie mobile est formée par un joint torique (21) ou une bague à quatre bords ou un dispositif analogue, agencé(e) dans un évidement perforé (22) dans le tronçon de connexion (2).

3. Couplage selon les revendications 1 à 2, **caractérisé en ce que** le tronçon de connexion (2) est muni d'une seconde partie mobile (24) à l'intérieur de celui-ci, qui est disposée de manière concentrique par rapport à la première partie mobile.

4. Couplage selon la revendication 3, **caractérisé en ce que** la seconde partie mobile est formée par une bague de verrouillage fendue (24).

5. Couplage selon la revendication 1, **caractérisé en ce que** la partie mobile est formée par une douille (28) comportant un piston mobile (29), ledit piston (29) étant comprimé hors de la douille (28) sous l'action de la pression du fluide qui est introduit, de sorte que la chemise de verrouillage ne peut pas être déplacée.

6. Couplage selon la revendication 5, **caractérisé en ce que** la douille (28) est fixée dans un trou transversal dans le tronçon de connexion.

7. Couplage selon les revendications 5 à 6, **caractérisé en ce que** le piston (29) est incliné par un ressort (30).

8. Couplage selon la revendication 6, **caractérisé en ce que** la douille (28) comporte des filetages extérieurs conçus pour coopérer avec les filetages intérieurs prévus dans le trou transversal.

9. Couplage selon les revendications 5 à 8, **caractérisé en ce que**, au niveau de l'extrémité orientée à l'opposé de la douille (28), le piston (29) se termine par un disque circulaire (32) qui a le même diamètre que le trou transversal.

10. Couplage selon la revendication 9, **caractérisé en ce que** le disque circulaire présente un évidement annulaire destiné à recevoir une bague de scellage (32).
